# EUROPEAN PATENT APPLICATION

(11) **EP 4 502 671 A1**
(43) Date of publication of application: **05.02.2025**
(21) Application number: 23779391.4
(22) Date of filing: 09.03.2023
(51) Int. Cl.: G02B 5/22, C03C 4/08, C03C 27/12

(54) **NEAR-INFRARED CUT-OFF FILTER**

(30) Priority: 31.03.2022 JP 2022059699
(71) Applicant: HOYA CORPORATION, Shinjuku-ku Tokyo 160-8347 (JP)
(72) Inventor: FUJII, Tatsuya, Tokyo 160-8347 (JP)
(74) Representative: Schaumburg und Partner Patentanwälte mbB
(86) International application number: PCT/JP2023/009108
(87) International publication number: WO 2023/189365

(57) **Abstract**

Disclosed herein is a near-infrared cut-off filter that more sharply absorbs light in both a long-wavelength range and a short-wavelength range to selectively transmit light in a visible light range.

A near-infrared cut-off filter (1) of the present invention has a first glass substrate (2) that absorbs light of at least longer wavelengths than visible light, a second glass substrate (4) that absorbs light of at least shorter wavelengths than visible light, and a resin layer (3) that is interposed between the first glass substrate and the second glass substrate and absorbs light of a specific wavelength.

## Description

### [Technical Field]

The present invention relates to a near-infrared cut-off filter.

### [Background Art]

A conventional near-infrared cut-off filter is known which has a transparent substrate and an inorganic film evaporated as a dielectric material onto the surface of the transparent substrate and which selectively reflects ultraviolet light and near-infrared light in incident light by the reflective film to transmit only visible light.

Such a near-infrared cut-off filter utilizing reflection has a problem such that ghost and flare caused by reflected light are observed by, for example, setting the near-infrared cut-off filter in an imaging device. Therefore, unwanted light needs to be removed by absorption.

Patent Literature 1 discloses an invention relating to a near-infrared cut-off filter having a transparent substrate made of glass and a resin layer formed on the surface of the transparent substrate to absorb a specific wavelength.

### [Citation List]

### [Patent Literature]

[Patent Literature 1]
Japanese Patent Laid-Open No. 2021-15269

### [Summary of Invention]

### [Technical Problem]

According to Patent Literature 1, a cut-off filter is available which transmits light in a visible light range without using a reflective film, but a cut-off filter has been requested that can sharply cut off light in both a longer-wavelength range and a shorter-wavelength range to extract only light in a visible light range.

In light of the above circumstances, it is an object of the present invention to provide a near-infrared cut-off filter that sharply absorbs light in both a long-wavelength range and a short-wavelength range to selectively transmit light in a visible light range.

### [Solution to Problem]

The present invention is directed to a near-infrared cut-off filter having a first glass substrate that absorbs light of at least longer wavelengths than visible light, a second glass substrate that absorbs light of at least shorter wavelengths than visible light, and a resin layer that is interposed between the first glass substrate and the second glass substrate and absorbs light of a specific wavelength.

In the present invention, it is preferred that the resin layer determines a long-wavelength-side half-power wavelength of transmittance curve of the near-infrared cut-off filter, and the second glass substrate determines a short-wavelength-side half-power wavelength of transmittance curve of the near-infrared cut-off filter.

### [Advantageous Effects of Invention]

The present invention makes it possible to sharply absorb light in both a long-wavelength range and a short-wavelength range to selectively transmit light in a visible light range. Further, weatherability of the resin layer containing a dye can be improved by sandwiching the resin layer between the glass substrates on both sides to shut off the resin layer from air.

### [Brief Description of Drawings]

[Figure 1] Figure 1 is a schematic sectional view of a near-infrared cut-off filter according to an embodiment of the present invention.
[Figure 2] Figure 2 is a graph showing glass substrates and a resin layer used in the near-infrared cut-off filter according to the embodiment and a spectral transmittance curve of the near-infrared cut-off filter.
[Figure 3] Figure 3 is a graph showing glass substrates and a resin layer used in a near-infrared cut-off filter according to another embodiment of the present invention and a spectral transmittance curve of the near-infrared cut-off filter.

### [Description of Embodiments]

Hereinbelow, an embodiment of the present invention (hereinafter abbreviated as "embodiment") will be described in detail. It should be noted that the present invention is not limited to the following embodiments, and various modifications may be made within the scope of the gist of the present invention.

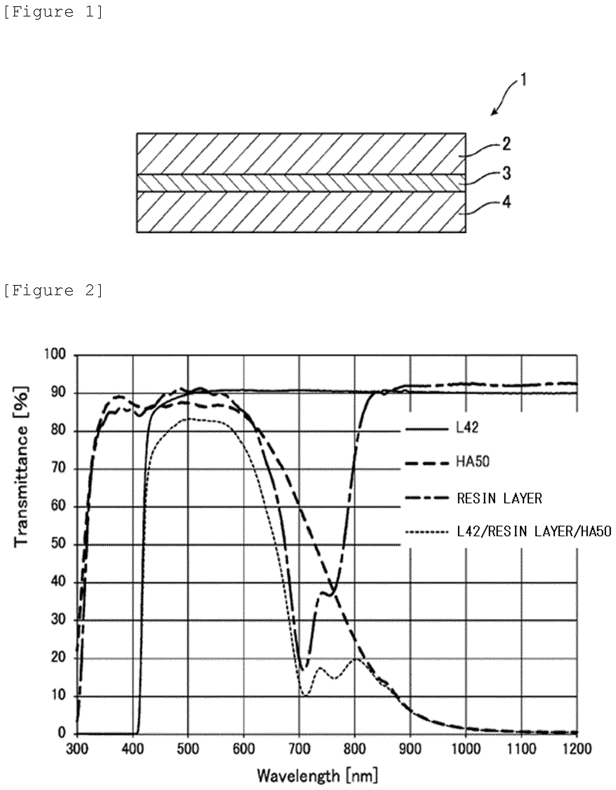

Figure 1 is a schematic sectional view of a near-infrared cut-off filter 1 according to the present embodiment. As shown in Figure 1, the near-infrared cut-off filter 1 has a first glass substrate 2, a resin layer 3, and a second glass substrate 4.

As shown in Figure 1, the first glass substrate 2 is in close contact with one of principal surfaces of the resin layer 3, and the second glass substrate 4 is in close contact with the other principal surface of the resin layer 3. Between the first glass substrate 2 and the resin layer 3 and between the second glass substrate 4 and the resin layer 3, a light-absorbing layer or the like different from the resin layer 3 may be interposed, but the first glass substrate 2 and the resin layer 3 can directly be in close contact with each other and the second glass substrate 4 and the resin layer 3 can directly be in close contact with each other without particularly providing another light-absorbing layer.

The near-infrared cut-off filter 1 shown in Figure 1 has, for example, a rectangular plate-shaped or circular external appearance, but the shape thereof is not limited.

### [First glass substrate 2]

The first glass substrate 2 absorbs light of at least longer wavelengths than visible light. The phrase "absorbs light of longer wavelengths" means that the first glass substrate 2 has characteristics such that its spectral transmittance curve falls on a longer-wavelength side beyond a visible light range. The long-wavelength-side half-power wavelength (NIR_λ50) of the transmittance curve of the first glass substrate 2 is preferably in the range of 650 to 800 nm, more preferably in the range of 670 to 770 nm, even more preferably in the range of 700 nm to 750 nm. The term " long-wavelength-side half-power wavelength (NIR_λ50)" refers to the wavelength at which the transmittance falls to 50% in the transmittance curve.

Although not limited to the following, the first glass substrate 2 preferably has a spectral transmittance at 800 nm or more of 25% or less, a spectral transmittance at 850 nm or more of 15% or less, and a spectral transmittance at 900 nm or more of 10% or less.

The short-wavelength side of spectral transmittance curve of the first glass substrate 2 is not limited, but the first glass substrate 2 preferably transmits ultraviolet light (especially, long-wavelength ultraviolet light). For example, the short-wavelength-side half-power wavelength (UV_λ50) is preferably in the range of 300 to 360 nm, more preferably in the range of 310 to 350 nm, even more preferably in the range of 320 to 340 nm. The term "short-wavelength-side half-power wavelength (UV_λ50)" refers to the wavelength at which the transmittance rises to 50% in the spectral transmittance curve.

For example, the first glass substrate 2 is an absorptive glass substrate made of phosphate-based glass.

The thickness of the first glass substrate 2 is not limited, but is preferably in the range of 0.01 to 3.00 mm, more preferably in the range of 0.01 to 2.00 mm, even more preferably in the range of 0.01 to 1.50 mm.

The phosphate-based glass is glass containing P and ○ as essential components and other optional components, and particularly preferably contains Fe₂O₃. When containing Fe₂O₃, the phosphate-based glass can more effectively absorb near-infrared light. Examples of the other optional components of the phosphate-based glass include Ca, Mg, Sr, Ba, Li, Na, K, and Cs.

The phosphate-based glass preferably has a specific composition of P₂O₅: 0 to 80%, Al₂O₃: 0 to 40 mass%, RO: 0 to 40 mass% (here, R = at least one selected from among Mg, Ca, Sr, Ba, and Zn), R'₂O: 0 to 20 mass% (here, R' = at least one selected from among Li, Na, and K), and Fe₂O₃: 0 to 30 mass%. Alternatively, the phosphate-based glass more preferably has a specific composition of P₂O₅: 30 to 75 mass%, Al₂O₃: 1 to 20 mass%, RO: 1 to 10 mass%, and Fe₂O₃: 0.5 to 25 mass%.

It should be noted that the first glass substrate 2 may be made of fluorophosphate-based glass.

Figure 2 shows the spectral transmittance curve of phosphate-based glass (model number HA50: manufactured by HOYA CORPORATION) as the first glass substrate 2. As can be seen from Figure 2, the phosphate-based glass absorbs infrared light (wavelength: 780 nm or more) and has a high transmittance in a visible light range of about 410 nm to 600 nm.

As shown in Figure 2, the transmittance of the phosphate-based glass (model number HA50) starts to gradually decrease as the wavelength increases above about 600 nm, and falls below 10% at about 900 nm. As just described, the transmittance tends to gradually decrease in a wavelength range of 600 nm to 900 nm. On the other hand, it can be understood that on the short-wavelength side, the phosphate-based glass has a high transmittance in part of the wavelength range of ultraviolet light.

### [Second glass substrate 4]

The second glass substrate 4 absorbs light of at least shorter wavelengths than visible light. The phrase "absorbs light of shorter wavelengths" means that the second glass substrate 4 has characteristics such that its spectral transmittance curve rises on a shorter-wavelength side below a visible light range. The half-power wavelength (UV_λ50) of transmittance curve of the second glass substrate 4 is preferably in the range of 380 to 430 nm, more preferably in the range of 390 to 420 nm, even more preferably in the range of 400 to 420 nm. The term "half-power wavelength (UV_λ50)" refers to the wavelength at which the transmittance rises to 50% in the transmittance curve.

A wavelength transition interval defined as an interval between a wavelength value at which the spectral transmittance is 72% and a wavelength value at which the spectral transmittance is 5% is 50 nm or less, preferably 30 nm or less, more preferably 20 nm or less, even more preferably 10 nm or less. As described above, the transmittance curve of the second glass substrate 4 sharply rises on the short-wavelength side. The rising part of transmittance curve of the second glass substrate 4 more sharply changes than the falling part of transmittance curve of the first glass substrate 2. The second glass substrate 4 is called a sharp cut filter.

The thickness of the second glass substrate 4 is not limited, but is preferably in the range of 0.01 to 3.00 mm, more preferably in the range of 0.01 to 2.00 mm, even more preferably in the range of 0.01 to 1.50 mm.

The second glass substrate 4 contains, for example, SiO₂, Al₂O₃, Li₂O, Na₂O, K₂O, CeO₂, and TiO₂. SiO₂ is a basic component of glass and is an important component for thermal stability and chemical durability of glass. The content of SiO₂ is preferably 50 to 70%, more preferably 55 to 65%. Al₂O₃ is a component effective at preventing phase separation and devitrification of glass, and the content of Al₂O₃ is preferably 0 to 5%, more preferably 0 to 2%. Li₂O is a component to improve the meltability of glass, and the content of Li₂O is preferably 0 to 10%, more preferably 0 to 5%. Na₂O is a component to improve the meltability of glass, and the content of Na₂O is preferably 0 to 20%, more preferably 5 to 15%. K₂O is a component to improve the meltability of glass, and the content of K₂O is preferably 0 to 20%, more preferably 5 to 15%. The total content of Li₂O + Na₂O + K₂O is preferably 10 to 30%, more preferably 15 to 25%. RO (MgO, CaO, SrO, BaO, ZnO) is a component that supports absorption by CeO₂ while maintaining the transmittance in a visible light range and that is effective at improving the melt moldability, devitrification resistance, and chemical durability of glass. The total content of RO is preferably 5 to 20%, more preferably 13 to 18%.

CeO₂ is a component essential for absorbing ultraviolet light. The content of CeO₂ is preferably 1 to 5%, more preferably 1.0 to 3%. TiO₂ is a component effective at preventing ultraviolet deterioration when combined with CeO₂. The content of TiO₂ is preferably 0 to 5%, more preferably 1.0 to 3%.

Figure 2 shows the spectral transmittance curve of sharp cut filter glass (model number L42: manufactured by HOYA CORPORATION) as the second glass substrate 4. As can be seen from Figure 2, the sharp cut filter glass (model number L42) absorbs ultraviolet light and transmits light of wavelengths longer than ultraviolet wavelengths.

As can be seen from Figure 2, the spectral transmittance of the sharp cut filter glass (model number L42) sharply rises at a wavelength of about 410 nm to 420 nm. Therefore, the wavelength transition interval is very narrow and is about 10 nm or less.

### [Resin layer 3]

The resin layer 3 is interposed between the first glass substrate 2 and the second glass substrate 4 and absorbs light of a specific wavelength.

The resin layer 3 is composed of a dye that absorbs light of a specific wavelength and a resin. The resin layer 3 contains, for example, a near-infrared absorbing dye and a transparent resin, and the dye is preferably uniformly dissolved or dispersed in the transparent resin.

The thickness of the resin layer 3 is not limited but is about several micrometers, and therefore the resin layer 3 is sufficiently thinner than the first glass substrate 2 and the second glass substrate **4.**

The near-infrared absorbing dye constituting the resin layer 3 may be, for example, at least one selected from among a cyanine-based dye, a polymethine-based dye, a squarylium-based dye, a porphyrin-based dye, a metal dithiol complex-based dye, a phthalocyanine-based dye, a diimonium-based dye, and inorganic oxide particles. Among them, at least one selected from among a squarylium-based dye, a cyanine-based dye, and a phthalocyanine-based dye is more preferred.

The resin constituting the resin layer 3 may be an adhesive for glass substrate bonding and is preferably a UV curable adhesive. A cross-linked structure is formed by the reaction between oligomers and monomers that contain a vinyl group, an acryloyl group, an epoxy group, or the like and have polymerizability using a radical or a cation generated by ultraviolet irradiation as an initiating species.

The resin layer 3 contains a polymerizable oligomer, a polymerizable monomer, a photopolymerization initiator, and various additives. Materials of the polymerizable oligomer, the polymerizable monomer, and the photopolymerization initiator are different depending on whether the reaction is photoradical polymerization or photocationic polymerization. In the case of photoradical polymerization, an acrylic resin is preferably used, and in the case of photocationic polymerization, an epoxy resin is preferably used. In the case of photoradical polymerization, the polymerizable oligomer may be, for example, polyester acrylate or urethane acrylate, the polymerizable monomer may be, for example, an acrylate monomer, and the photopolymerization initiator may be, for example, a benzophenone-based photopolymerization initiator or an acetophenone-based photopolymerization initiator. On the other hand, in the case of photocationic polymerization, the polymerizable oligomer may be, for example, an alicyclic epoxy or a glycidyl-type epoxy, the polymerizable monomer may be, for example, a vinyl ether monomer, and the photopolymerization initiator may be, for example, a sulfonium salt-based photopolymerization initiator or a iodonium salt-based photopolymerization initiator. The resin layer 3 may further contain, in addition to the near-infrared absorbing dye and the transparent resin, optional components such as a color tone correcting dye, a leveling agent, an antistatic agent, a heat stabilizer, a light stabilizer, an antioxidant, a dispersing agent, a flame retardant, a lubricant, and a plasticizer as additives without impairing the effects of the present invention.

In the present embodiment, the adhesive as the resin layer 3 is applied onto the surface of the first glass substrate 2 or the second glass substrate 4, the other glass substrate is then bonded thereto, and they are irradiated with ultraviolet light. When a thermosetting resin involving dehydration condensation is used, dehydration condensation does not appropriately occur even when thermal curing is performed in a state where the resin layer 3 is sandwiched between the glass substrates 2 and 4 on both sides, and therefore the resin layer 3 and the glass substrates 2 and 4 cannot effectively be bonded together. However, in the present embodiment, a UV curable resin is used as the resin layer 3 and UV curing is performed in a state where the glass substrates 2 and 4 are disposed on both surfaces of the resin layer 3. The second glass substrate 4 absorbs ultraviolet light, and therefore ultraviolet light is preferably emitted from the first glass substrate 2 side to cure the resin layer 3 by UV.

In the present embodiment, the resin layer 3 is configured to absorb light of a specific wavelength, and therefore desired light in a visible light range can be extracted by setting the absorption wavelength depending on the spectral transmittance characteristics of the glass substrates 2 and 4.

The resin layer 3 may be one containing a near-infrared absorbing dye having a maximum absorption wavelength in the range of 650 to 760 nm. The resin layer 3 may further contain a near-infrared absorbing dye having a maximum absorption wavelength in the range of 800 to 1200 nm.

The resin layer shown in Figure 2 contains a near-infrared absorbing dye having a maximum absorption wavelength in the range of 650 to 760 nm. Therefore, as can be seen from Figure 2, the transmittance starts to more sharply decrease as the wavelength increases above about 600 nm as compared to the first glass substrate 2.

### [Characteristics and effects of near-infrared cut-off filter 1 according to present embodiment]

As is clear also from Figure 2, in the present embodiment, falling of spectral transmittance of the first glass substrate 2 is gentler than rising of spectral transmittance of the second glass substrate 4. Therefore, rising of transmittance curve of the near-infrared cut-off filter 1 can be determined by the short-wavelength-side half-power wavelength of spectral transmittance curve of the second glass substrate 4, but the long-wavelength-side half-power wavelength of transmittance curve of the near-infrared cut-off filter 1 is determined by the resin layer 3 to make falling of spectral transmittance of the near-infrared cut-off filter 1 sharp like rising of the spectral transmittance. Specifically, the resin layer 3 contains at least a near-infrared absorbing dye to adjust falling of transmittance curve of the near-infrared cut-off filter 1 to be sharper than falling of spectral transmittance of the first glass substrate 2.

For example, when the resin layer 3 contains a near-infrared absorbing dye having a maximum absorption wavelength of about 700 nm, the transmittance curve of the near-infrared cut-off filter 1 can have a long-wavelength-side half-power wavelength in the range of about 600 nm to 700 nm, and therefore falling of spectral transmittance of the near-infrared cut-off filter 1 can be made sharper than falling of spectral transmittance of the first glass substrate 2. The degree of maximum absorption wavelength of the near-infrared absorbing dye contained in the resin layer 3 can variously be adjusted by which wavelength range falling of the spectral transmittance is set in.

In this way, in the spectral transmittance curve of the near-infrared cut-off filter 1 having a laminated structure of second glass substrate 4/resin layer 3/first glass substrate 2, the short-wavelength-side half-power wavelength (UV_λ50) of the transmittance curve is 380 to 430 nm and the long-wavelength-side half-power wavelength (NIR_λ50) of the transmittance curve is 600 to 700 nm. Therefore, the near-infrared cut-off filter 1 can selectively transmit light in a visible light range (in the range of 420 nm to 650 nm) with high accuracy and can have characteristics close to human spectral luminous efficacy.

Figure 2 shows the spectral transmittance curve of the near-infrared cut-off filter 1 (L42/resin layer/HA50) having a three-layer structure of second glass substrate 4 (L42)/resin layer 3/first glass substrate 2 (HA50). As shown in Figure 2, the near-infrared cut-off filter 1 has an excellent transmittance in a visible light range (in the range of about 420 nm to 600 nm), and the transmittance sharply changes in both a short-wavelength range and a long-wavelength range on both sides of the visible light range. As is clear from Figure 2, the second glass substrate 4 (L42) determines the short-wavelength-side half-power wavelength (UV_λ50) of transmittance curve of the near-infrared cut-off filter 1, and the resin layer determines (controls) the long-wavelength-side half-power wavelength (NIR_λ50) of transmittance curve of the near-infrared cut-off filter 1.

In the present embodiment, the resin layer 3 containing a dye and having poor weatherability is shut off from air by covering not only one but both of the principal surfaces of the resin layer 3 with glass substrates, which is effective at improving the weatherability of the resin layer 3.

### [Configuration of near-infrared cut-off filter of another embodiment]

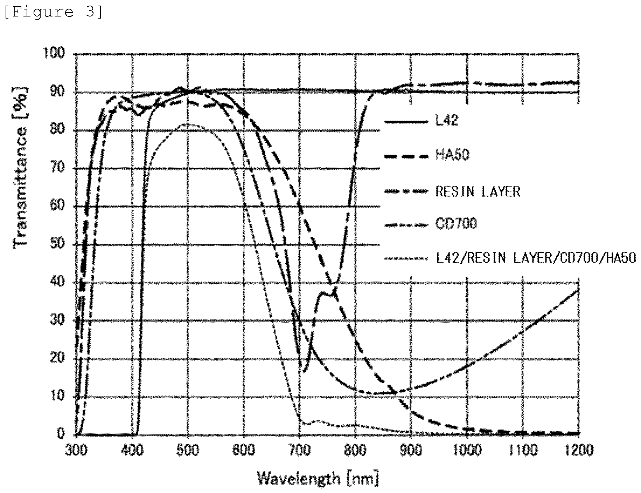

For example, unlike the laminated structure of L42/resin layer/HA50 shown in Figure 2, a laminated structure shown in Figure 3 has a glass substrate made of fluorophosphate-based glass (model number CD700: manufactured by HOYA CORPORATION) and interposed between the resin layer and HA50. In this case, the transmittance at a wavelength of 700 nm or more of a near-infrared cut-off filter having such a laminated structure of L42/resin layer/CD700/HA50 can sufficiently be reduced to about 50 or less, and therefore the near-infrared cut-off filter can transmit light in a visible light range with high accuracy.

### [Intended use]

The intended use of the near-infrared cut-off filter 1 according to the present embodiment is not limited, but the near-infrared cut-off filter 1 can be used for, for example, imaging devices, automobile parts (e.g., windshield glass), and architectural glass. An imaging device using the near-infrared cut-off filter 1 according to the present embodiment prevents the occurrence of ghost, and therefore images excellent in color reproducibility can be obtained.

### [Industrial Applicability]

The near-infrared cut-off filter according to the present invention can be used to more sharply absorb light in both a long-wavelength range and a short-wavelength range to selectively transmit light in a visible light range. Therefore, the near-infrared cut-off filter according to the present embodiment can suitably be used for imaging devices and the like to exhibit characteristics close to human spectral luminous efficacy.

The present application is based on Japanese Patent Application No. 2022-059699 filed on March 31, 2022, the contents of which are all incorporated herein by reference.

## Claims

1. A near-infrared cut-off filter comprising:
a first glass substrate that absorbs light of at least longer wavelengths than visible light;
a second glass substrate that absorbs light of at least shorter wavelengths than visible light; and
a resin layer that is interposed between the first glass substrate and the second glass substrate and absorbs light of a specific wavelength.

2. The near-infrared cut-off filter according to claim 1, wherein the resin layer determines a long-wavelength-side half-power wavelength of transmittance curve of the near-infrared cut-off filter, and the second glass substrate determines a short-wavelength-side half-power wavelength of transmittance curve of the near-infrared cut-off filter.
